# DEMANDE DE BREVET EUROPEEN

(11) **EP 0 913 273 A1**
(43) Date de publication de la demande: **06.05.1999**
(21) Numéro de dépôt: 98402719.3
(22) Date de dépôt: 30.10.1998
(51) Int. Cl.: B60B 33/02

(54) **Chariot à roulettes orientables**

(30) Priorité: 30.10.1997 FR 9713642
(71) Demandeur: COMPAGNIE HOBART, 77183 Croissy-Beaubourg (FR)
(72) Inventeur: Marie, Christian (dit Robin), 75016 Paris (FR)
(74) Mandataire: Picard, Jean-Claude Georges

(57) **Abrégé**

Chariot ayant un châssis propre à se déplacer sur le sol selon son axe longitudinal ainsi que latéralement par rapport à cet axe, par l'intermédiaire d'un train de roulement comportant au moins une roulette directrice dont l'axe de rotation est monté sur une chape elle-même montée pivotante, sur une pièce fixe dudit châssis, autour d'un pivot vertical.

Ce chariot est caractérisé en ce qu'il comporte au moins un verrou élastique 11 à 15 propre à maintenir, de façon élastiquement déverrouillable, la chape 6 de chaque roulette directrice 2 dans une orientation déterminée par rapport audit axe longitudinal X du châssis 1.

Application : chariots pour le service des repas dans les avions.

## Description

La présente invention concerne un chariot ayant un châssis propre à se déplacer sur le sol selon son axe longitudinal ainsi que latéralement par rapport à cet axe, par l'intermédiaire d'un train de roulement comportant au moins une roulette directrice dont l'axe de rotation est monté sur une chape elle-même montée pivotante, sur une pièce fixe dudit châssis, autour d'un pivot vertical.

Généralement, sur de tels chariots, tout déplacement du châssis oriente automatiquement les roulettes directrices dans la bonne direction, grâce à un décalage de l'axe de rotation de ces roulettes par rapport au pivot vertical de leur chape, cet axe ayant alors naturellement tendance à venir se placer le plus en arrière possible, derrière ledit pivot (eu égard au sens d'avancement du chariot).

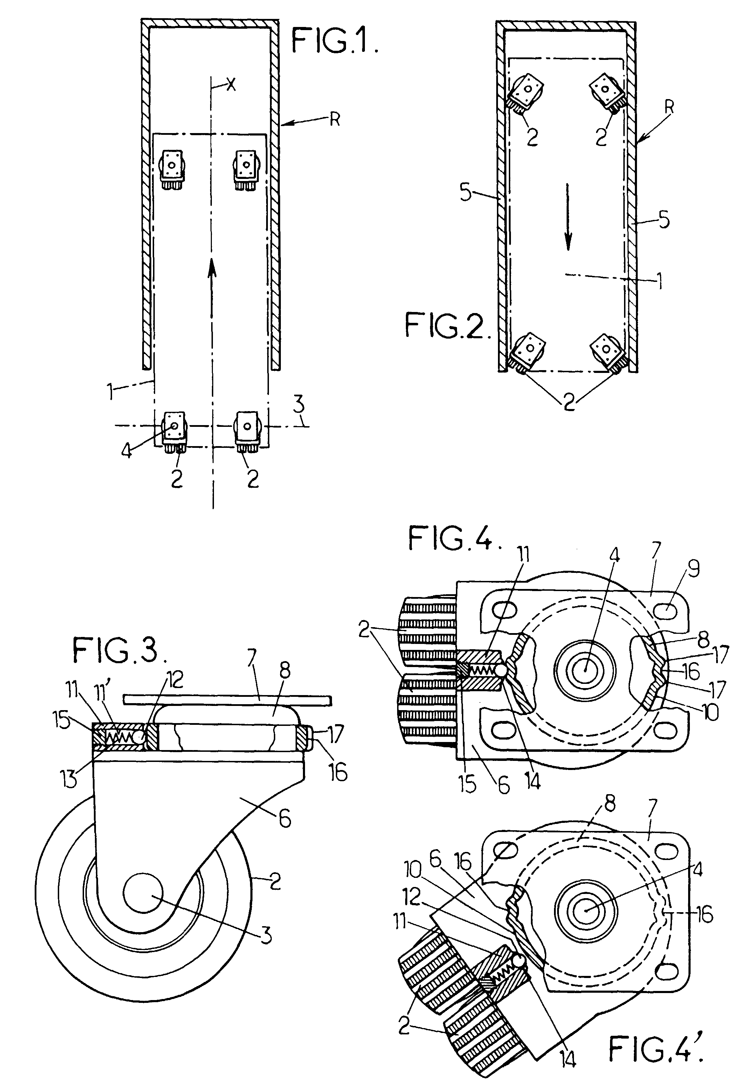

La figure 1 des dessins ci-annexés montre un tel chariot garé dans un local de rangement étroit R, par exemple à bord d'un avion. Ce chariot possède dans cet exemple un châssis 1 d'axe X, monté sur un train de roulement possédant quatre roulettes directrices jumelées 2. On voit qu'au cours de son rangement (dans le sens de la flèche) les roulettes s'orientent dans la bonne direction, leur axe de rotation 3 venant en arrière de l'axe 4 du pivot vertical correspondant de leur chape.

Cette disposition est certes favorable à un bon guidage du chariot lors de son rangement, mais lors de son extraction dans le sens de la flèche de la figure 2, les chapes ont bien entendu tendance à pivoter sur leurs axes 4, ce qui amène fréquemment les roulettes 2 à se coincer sur les parois latérales 5 du local de rangement R ou sur les rails de guidage éventuellement prévus sur le plancher du local.

Cela peut empêcher l'extraction complète du chariot, et constitue une gêne considérable pour le personnel de service.

Le but de la présente invention est de remédier à cet inconvénient, et à cet effet, un chariot du type général défini au début est, conformément à l'invention, caractérisé en ce qu'il comporte au moins un verrou élastique propre à maintenir, de façon élastiquement déverrouillable, la chape de chaque roulette directrice dans une orientation déterminée par rapport audit axe longitudinal du châssis.

Bien entendu, dans le cas d'un chariot à quatre roulettes directrices, cette disposition concernera chacune de ces quatre roulettes, et si en outre ce chariot doit être logé dans un local de rangement étroit tel que le local R ci-dessus, on fera en sorte que ladite orientation déterminée soit telle que le plan de chaque roulette directrice soit parallèle audit axe longitudinal du châssis.

Ainsi, lors de l'extraction du chariot, les roulettes directrices garderont, grâce à leur indexation par le verrou élastique, exactement la même orientation que lors de l'opération de rangement du chariot, puisque lors de son extraction le chariot ne pourra pivoter, étant maintenu par les parois latérales 5 du local R. Par contre, une fois le chariot extrait, il sera facile de déverrouiller élastiquement les roulettes directrices en le faisant pivoter, et les roulettes retrouveront leur fonction de libre pivotement, de part et d'autre de leur position d'indexation.

Un chariot conforme à l'invention peut encore être caractérisé en ce que ledit verrou comporte un organe de verrouillage mobile radialement, dans un logement de ladite chape, essentiellement entre au moins deux positions, à savoir une position partiellement extraite pour laquelle un ressort contenu dans le logement presse cet organe contre une butée bordant un orifice dudit logement, et une position partiellement rentrée pour laquelle ledit ressort presse cet organe de verrouillage sur les flancs d'une cavité de ladite pièce fixe du châssis.

Avantageusement, et dans le cas d'un chariot dans lequel ladite pièce fixe du châssis est constituée par une cage de roulement dudit pivot vertical, cette cage ayant une paroi extérieure cylindrique dont l'axe de révolution est confondu avec l'axe dudit pivot et autour et en face de laquelle ledit organe de verrouillage peut se déplacer lors du pivotement de ladite chape, on fera en sorte que les flancs de ladite cavité soient formés par deux nervures voisines en saillie sur ladite paroi, le positionnement dudit logement par rapport à cette paroi étant tel que dans sa position partiellement extraite, ledit organe de verrouillage mobile, par exemple une bille, reste légèrement espacé de ladite paroi.

Ainsi on évitera, en position de déverrouillage de la chape, une usure de la bille et l'usure qui autrement serait produite par le roulement de la bille contre ladite paroi extérieure de la cage de roulement.

Un mode d'exécution de l'invention va maintenant être décrit à titre d'exemple nullement limitatif, avec référence aux autres figures du dessin ci-annexé dans lequel:
- la figure 3 est une vue en élévation d'une chape et de sa roulette, avec coupe verticale partielle par l'axe du logement de l'organe de verrouillage ;
- la figure 4 est une vue en plan du même élément du train de roulement en position de verrouillage axial, avec arrachements et coupe horizontale partielle par l'axe dudit logement ; et
- la figure 4' est une vue analogue à la précédente, en position de déverrouillage.

Sur les figures 3, 4 et 4', on a représenté des éléments de train de roulement d'un chariot, par exemple un chariot pour le service des repas dans un avion, ces éléments comportant chacun une chape 6 portant l'axe 3 des roulettes 2 et montée pivotante sur une pièce fixe 7-8 du châssis 1, autour d'un axe de pivot vertical 4. La partie 7 de cette pièce est une platine pourvue de trous 9 permettant sa fixation sous le châssis 1 du chariot, et la pièce 8 est une cage de roulement reliée par un roulement à billes (non représenté) à une cage correspondante de la chape 6, cette cage 8 possédant une paroi extérieure globalement cylindrique 10 dont l'axe de révolution est confondu avec l'axe 4 dudit pivot.

Sur la face supérieure de la chape 6 est fixée une pièce de préférence métallique 11 formant intérieurement un logement cylindrique 11' pour une bille de verrouillage en acier 12 normalement pressée par un ressort hélicoïdal 13 contre une butée 14 du logement 11', constituée par un rétrécissement de son extrémité ; à l'extrémité opposée, le logement 11' est fermé par un bouchon 15 servant d'appui au ressort 13. Ce bouchon 15 peut être vissé dans la pièce 11, ce qui permet de régler la force avec laquelle le ressort 13 presse la bille 12 contre la butée 14. Cet agencement est tel que lors du pivotement de la chape 6, avec ses roulettes 2, autour de l'axe 4, la bille 12 se déplace vis-à-vis de la paroi extérieure 10 de la cage de roulement 8 (voir figure 4'), mais sans entrer en contact avec la partie cylindrique de cette paroi.

Cette dernière porte deux cavités 16 diamétralement opposées l'une à l'autre, dans un plan vertical parallèle à l'axe longitudinal X du châssis 1 du chariot. Ces cavités 16 sont formées chacune par deux nervures voisines 17 en saillie sur la paroi 10. L'agencement est tel que la bille 12, constituant l'organe de verrouillage, est pressée par le ressort 13 au fond de l'une ou l'autre de ces cavités 16 après son franchissement d'une des nervures 17 en comprimant le ressort 13 et en restant ainsi légèrement écartée de la butée 14, à l'intérieur du logement 11' (figure 4). Lorsque le plan des roulettes 2 arrive ainsi dans une position parallèle à l'axe longitudinal X du châssis, elles sont élastiquement verrouillées. Le chariot comportant quatre roulettes ou paires de roulettes jumelées 2, on obtient ainsi la situation de rangement représentée à la figure 1 (situation également obtenue quand le chariot est poussé en ligne droite, par exemple entre les rangées de fauteuils dans la cabine d'un avion). On conçoit alors facilement que l'on pourra ensuite extraire le chariot de son local de rangement R sans pivotement des chapes 6, ce qui évite la situation de blocage de la figure 2.

Par contre, lorsque le chariot sera extrait, il sera facile, par une poussée latérale exercée sur une de ses extrémités, de déverrouiller les roulettes, comme représenté sur la figure 4', pour faire suivre au chariot un parcours incurvé quelconque.

Il est à noter que la présence des deux cavités diamétralement opposées 16, quoique non strictement indispensable, permet d'introduire le chariot dans le local de rangement R indifféremment par l'une ou l'autre de ses deux extrémités.

Il est à noter également que l'invention pourrait s'appliquer à bien d'autres dispositifs que les chariots utilisés pour le service des repas dans les avions, et s'appliquer à tout autre chariot, quel que soit son usage, par exemple aux chariots et inserts des fours de cuisines collectives ou encore aux meubles de classement mobiles.

## Revendications

1. Chariot ayant un châssis propre à se déplacer sur le sol selon son axe longitudinal ainsi que latéralement par rapport à cet axe, par l'intermédiaire d'un train de roulement comportant au moins une roulette directrice dont l'axe de rotation est monté sur une chape elle-même montée pivotante, sur une pièce fixe dudit châssis, autour d'un pivot vertical, caractérisé en ce qu'il comporte au moins un verrou élastique (11 à 15) propre à maintenir, de façon élastiquement déverrouillable, la chape (6) de chaque roulette directrice (2) dans une orientation déterminée par rapport audit axe longitudinal (X) du châssis (1).

2. Chariot selon la revendication 1, caractérisé en ce que ladite orientation déterminée est telle que le plan de chaque roulette directrice (2) soit parallèle audit axe longitudinal (X) du châssis (1).

3. Chariot selon la revendication 1 ou 2, caractérisé en ce que ledit verrou (11 à 15) comporte un organe de verrouillage mobile radialement (12), dans un logement (11') de ladite chape (6), essentiellement entre au moins deux positions, à savoir une position partiellement extraite pour laquelle un ressort (13) contenu dans le logement (11') presse cet organe (12) contre une butée (14) bordant un orifice dudit logement, et une position partiellement rentrée pour laquelle ledit ressort (13) presse cet organe de verrouillage (12) sur les flancs d'une cavité (16) de ladite pièce fixe (7-8) du châssis.

4. Chariot selon la revendication 3, caractérisé en ce qu'il comporte, sur ladite pièce fixe (7-8) du châssis (1), au moins deux cavités (16) opposées l'une à l'autre par rapport audit pivot, ces cavités (16) étant situées dans un plan parallèle audit axe longitudinal (X) du châssis (1).

5. Chariot selon la revendication 3 ou 4, dans lequel ladite pièce fixe du châssis est constituée par une cage de roulement (8) dudit pivot vertical, cette cage ayant une paroi extérieure cylindrique (10) dont l'axe de révolution est confondu avec l'axe (4) dudit pivot et autour et en face de laquelle ledit organe de verrouillage (12) peut se déplacer lors du pivotement de ladite chape (6), caractérisé en ce que les flancs de chaque cavité (16) sont formés par deux nervures voisines (17) en saillie sur ladite paroi (10), le positionnement dudit logement (11') par rapport à cette paroi (10) étant tel que dans sa position partiellement extraite, ledit organe de verrouillage mobile (12) reste légèrement espacé de ladite paroi (10).

6. Chariot selon l'une quelconque des la revendication 3 à 5, caractérisé en ce que ledit organe de verrouillage mobile (12) est une bille.

7. Chariot, en particulier pour le service des repas dans une cabine d'avion, caractérisé en ce que ledit train de roulement comporte quatre roulettes ou paires de roulettes directrices (2) équipées conformément à l'une quelconque des revendications précédentes.
